# FASCICULE DE BREVET EUROPEEN

(11) **EP 2 146 898 B1**
(45) Date de publication et mention de la délivrance du brevet: **08.12.2010**
(21) Numéro de dépôt: 08717729.1
(22) Date de dépôt: 13.03.2008
(51) Int. Cl.: B64D 29/06

(54) **CARENAGE AERODYNAMIQUE ARRIERE INFERIEUR POUR DISPOSITIF D' ACCROCHAGE D' UN MOTEUR D' AERONEF**
HINTERE, UNTERE AERODYNAMISCHE VERKLEIDUNG FÜR DIE BEFESTIGUNGSVORRICHTUNG EINES FLUGZEUGMOTORS
REAR LOWER AERODYNAMIC FAIRING FOR THE ATTACHMENT DEVICE OF AN AIRCRAFT ENGINE

(30) Priorité: 16.03.2007 FR 0753890
(43) Date de publication de la demande: 27.01.2010
(73) Titulaire: AIRBUS OPERATIONS, 31060 Toulouse (FR)
(72) Inventeur: DUMONT, Jean-François, F-31530 Thil (FR); ROCHE, Frédéric, F-31530 Bretx (FR)
(74) Mandataire: Ilgart, Jean-Christophe
(86) Numéro de dépôt international: PCT/EP2008/052985
(87) Numéro de publication internationale: WO 2008/113737

(56) Documents cités:
- US-A- 5 524 846
- US-A1- 2003 201 366

## Description

### DOMAINE TECHNIQUE

La présente invention se rapporte à un carénage aérodynamique arrière inférieur pour dispositif d'accrochage d'un moteur destiné à être interposé entre une voilure d'aéronef et le moteur concerné, ce carénage étant également appelé « bouclier » ou « APF » (de l'anglais « Aft Pylon Fairing »).

L'invention peut être utilisée sur tout type d'aéronef équipé de turboréacteurs ou de turbopropulseurs.

Ce type de dispositif d'accrochage, également appelé mât d'accrochage ou « EMS » (de l'anglais « Engine Mounting Structure »), permet de suspendre un turbomoteur au-dessous de la voilure de l'aéronef, ou bien de monter ce turbomoteur au-dessus de cette même voilure.

### ETAT DE LA TECHNIQLTE ANTERIEURE

Un tel dispositif d'accrochage, voir par exemple US 2003/201366, est en effet prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales de rigidification.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur. Dans l'art antérieur, ce dispositif de reprise comprend habituellement deux bielles latérales raccordées d'une part à une partie arrière du carter de soufflante du turbomoteur, et d'autre part à une attache arrière fixée sur le carter central de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant la ségrégation et le maintien des systèmes tout en supportant des éléments de carénage aérodynamique, ces derniers prenant généralement la forme d'assemblages de panneaux rapportés sur les structures. De façon connue de l'homme du métier, les structures secondaires se différencient de la structure rigide par le fait qu'elles ne sont pas destinées à assurer le transfert des efforts provenant du moteur et devant être transmis vers la voilure de l'aéronef.

Parmi les structures secondaires, on compte le carénage aérodynamique arrière inférieur, également dénommé APF, qui dispose d'une pluralité de fonctions parmi lesquelles on note la formation d'une barrière thermique ou anti-feu, et la formation d'une continuité aérodynamique entre la sortie du moteur et le mât d'accrochage.

Le carénage aérodynamique arrière inférieur prend généralement la forme d'un caisson comprenant deux panneaux latéraux assemblés entre eux par des nervures intérieures transversales de rigidification espacées les unes des autres selon une direction longitudinale du carénage, ainsi qu'un plancher de protection thermique. Il est précisé que ce caisson n'est habituellement pas fermé à l'opposé du plancher de protection thermique, à savoir en partie supérieure lorsque le moteur est destiné à être suspendu sous la voilure de l'aéronef, étant donné que c'est à cet endroit qu'il vient se raccorder sur les autres structures du mât.

Le plancher de protection thermique est pourvu d'une surface extérieure destinée à être épousée par un flux primaire du moteur qu'il délimite, alors que les panneaux latéraux sont quant à eux prévus pour être épousés extérieurement par un flux secondaire du moteur, en raison de leur implantation dans le canal annulaire de flux secondaire du moteur, et/ou en sortie de celui-ci.

Dans les solutions de l'art antérieur, le plancher de protection thermique est monté fixement sur les nervures intérieures transversales du caisson au contact desquelles il se trouve, et ses extrémités latérales opposées sont montées fixement respectivement sur les deux panneaux latéraux qui épousent également les nervures transversales.

Dans cette configuration, le plancher de protection thermique est au contact du flux primaire de température très élevée, ce qui le conduit à se déformer fortement par dilatation thermique. Cependant, ses encastrements respectifs dans les nervures intérieures transversales et dans l'extrémité inférieure de chacun des deux panneaux latéraux engendre de fortes contraintes thermomécaniques au sein de ce plancher, ce qui est bien évidemment néfaste pour ce dernier.

Il est noté que ce phénomène d'introduction de fortes contraintes thermomécaniques due à l'importante dilatation thermique du plancher est accentuée par le fait que les panneaux latéraux baignent dans le flux secondaire relativement froid, de sorte qu'ils ne subissent que très peu de déformation par dilatation thermique. Néanmoins, ils rencontrent tout de même une déformation sensible provoquée par la mise en contraintes résultant de la dilatation du plancher auquel ils sont directement et rigidement raccordés, ce qui conduit à dégrader leur forme aérodynamique, et qui, d'une façon plus générale, provoque la détérioration de la qualité aérodynamique globale du carénage. Naturellement, une telle dégradation est pénalisante en terme de traînée parasite engendrée.

A ce titre, il est précisé que la qualité aérodynamique du carénage se trouve également dégradée par les déformations localisées du plancher de protection thermique qui ne peut se dilater librement, sans contrainte, en raison de son encastrement dans certains éléments du carénage telles que les nervures intérieures, comme cela a été décrit ci-dessus. Le flux primaire étant un jet très rapide, les déformations localisées rencontrées au niveau du plancher produisent en effet une traînée parasite sensiblement importante.

Enfin, il est noté que les nervures intérieures transversales, qui ne sont elles pas directement épousées par le flux secondaire sensiblement frais en raison de leur localisation à l'intérieur du caisson, peuvent être sensibles à l'apport de chaleur provenant du plancher de protection thermique avec lequel elles sont en contact. Ainsi, pour leur permettre de remplir leur fonction de maintien mécanique des différents éléments du carénage en forme de caisson, il peut être nécessaire d'avoir recours à un surdimensionnement de ces nervures et/ou à l'utilisation, pour leur fabrication, de matériaux coûteux présentant de bonnes propriétés de résistance à la chaleur.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un carénage aérodynamique arrière inférieur pour dispositif d'accrochage d'un moteur destiné à être interposé entre une voilure d'aéronef et le moteur, le carénage formant caisson comprenant deux panneaux latéraux assemblés entre eux par des nervures intérieures transversales de rigidification espacées les unes des autres selon une direction longitudinale du carénage, et comportant en outre un plancher de protection thermique pourvu d'une surface extérieure destinée à être épousée par un flux primaire du moteur.

Selon l'invention, le plancher de protection thermique est constitué de plusieurs tronçons de plancher répartis selon la direction longitudinale et non-rigidement liés les uns aux autres. De plus, le carénage aérodynamique arrière inférieur comporte en outre des moyens d'assemblage des tronçons de plancher, déportant ces derniers des nervures intérieures transversales de rigidification auxquelles sont raccordés ces mêmes moyens d'assemblage.

L'une des particularités de la présente invention réside dans le fait que ce plancher est à présent déporté des nervures intérieures transversales à l'aide des moyens d'assemblage prévus à cet effet, étant entendu que ce sont ces mêmes moyens d'assemblage qui assurent, de préférence à eux seuls, le montage des tronçons de plancher sur les nervures. En d'autres termes, le plancher tronçonné n'est plus plaqué contre les nervures, ce qui lui permet avantageusement de se déformer plus librement par dilatation thermique suite à l'importante chaleur dégagée par le flux primaire épousant ce plancher.

Cette configuration originale dans laquelle le plancher est donc sensiblement libre vis-à-vis des nervures intérieures permet de diminuer considérablement les contraintes thermomécaniques subies par le plancher suite à une telle dilatation, par rapport à celles subies dans les réalisations antérieures dans lesquelles le facteur principal d'introduction des contraintes thermomécaniques dans le plancher était constitué par l'encastrement de ce dernier dans les nervures.

A cet égard, étant donné que le plancher est susceptible de se déformer par dilatation thermique en rencontrant moins de contraintes qu'auparavant, les déformations localisées dégradant la qualité aérodynamique de ce plancher sont de ce fait également fortement diminuées. Il en résulte donc une amélioration de la qualité aérodynamique globale du carénage, diminuant sensiblement les effets de traînée parasite et améliorant par la même le rapport performance/consommation de l'aéronef.

Les effets bénéfiques précités sont avantageusement accentués par le tronçonnement du plancher en plusieurs tronçons de plancher répartis selon la direction longitudinale, et non-rigidement liés les uns aux autres. Cela s'explique par la diminution de la dilatation thermique rencontrée au niveau des tronçons qui présentent une longueur réduite par rapport à la longueur totale du plancher, et également par le fait que les liaisons non-rigides prévues entre les tronçons permettent à ceux-ci de se déplacer relativement les uns par rapport aux autres durant les phases de dilatation, sans générer de contrainte mécanique trop importante.

De préférence, le plancher tronçonné déporté des nervures intérieures est entièrement dépourvu de contact avec celles-ci, de sorte que la chaleur transmise à ces nervures par le plancher transite d'abord par les moyens d'assemblage. Cela permet à la chaleur de perdre en intensité avant d'atteindre les nervures intérieures, qui ne sont donc que faiblement sollicitées thermiquement, impliquant notamment de façon avantageuse la possibilité d'utiliser d'autres matériaux que ceux plus coûteux présentant de bonnes propriétés de résistance à la chaleur, sans pour autant nécessiter un surdimensionnement de ces nervures.

De plus, grâce à la présence de nervures intérieures ne se dilatant que faiblement, le carénage aérodynamique arrière inférieur peut être intégré aux autres structures secondaires du mât, comme la structure arrière.

De préférence, deux tronçons de plancher quelconques et directement consécutifs dans la direction longitudinale sont agencés bord à bord. Il est préférentiellement fait en sorte que ces bords soient affleurants, afin d'offrir une continuité aérodynamique entre les deux tronçons de plancher.

De préférence, à chaque tronçon de plancher sont associés deux tronçons de voile longitudinal de jonction aérodynamique, ces deux tronçons disposant chacun d'une première extrémité latérale montée fixement respectivement sur l'une et l'autre des deux extrémités latérales dudit tronçon de plancher associé, et d'une seconde extrémité latérale agencée à proximité respectivement de l'un et l'autre des deux panneaux latéraux. Par conséquent, les deux voiles longitudinaux formés par les tronçons précités, agencés de part et d'autre de ces derniers, permettent d'assurer une continuité aérodynamique entre chaque extrémité latérale du tronçon de plancher, et le panneau latéral associé, rapporté sur les nervures intérieures. A cet égard, il est noté que la présence des voiles longitudinaux permet de renforcer la rigidité du plancher de protection thermique. Cette spécificité, ajoutée aux différents effets techniques avantageux exposés ci-dessus, permet d'envisager la réduction de l'épaisseur du plancher par rapport à celle rencontrée dans l'art antérieur, ce qui se traduit en particulier par des gains en termes de masse et de coûts.

Préférentiellement, en section quelconque transversale du carénage, la première extrémité de chaque tronçon de voile longitudinal et son extrémité latérale associée de tronçon de plancher de protection thermique forment conjointement une pointe, de préférence en forme de Y. En d'autres termes, chaque tronçon de voile longitudinal est tel que sa première extrémité latérale est plaquée et au contact de son extrémité latérale de tronçon de plancher associée, avant de s'écarter progressivement de ce même plancher en allant vers sa seconde extrémité latérale située à proximité des nervures intérieures et des panneaux latéraux, pour la continuité aérodynamique avec ceux-ci.

Cette forme préférée de pointe permet avantageusement de pouvoir conserver une séparation efficace entre le flux primaire circulant sous le plancher et le flux secondaire épousant les panneaux latéraux, de sorte que ces derniers ne sont pas exposés à la chaleur importante du flux primaire.

De préférence, toujours en section quelconque transversale du carénage, chaque tronçon de voile longitudinal et le tronçon de plancher de protection thermique prennent chacun sensiblement la forme d'une ligne formant courbure s'ouvrant vers l'extérieur par rapport audit carénage, cette forme étant notamment parfaitement adaptée pour assurer un bon écoulement aérodynamique du flux primaire.

Toujours de manière préférentielle, les tronçons de voile longitudinal et les tronçons de plancher de protection thermique sont réalisés en aluminium ou en matériau composite formé par un mélange de résine et de fibres de carbone et/ou de verre, ce qui engendre des gains en termes de masse et de coûts. Néanmoins, ils pourraient aussi être réalisés en titane, surtout pour ce qui concerne les tronçons de plancher de protection thermique plus exposés au flux primaire, sans sortir du cadre de l'invention.

De préférence, les moyens d'assemblage sont montés fixement sur une portion inférieure des nervures intérieures transversales de rigidification, à distance des panneaux latéraux qui sont quant à eux préférentiellement montés fixement sur des portions latérales de ces mêmes nervures intérieures transversales.

D'une façon plus générale, les tronçons de plancher de protection thermique et les tronçons de voile longitudinal sont dépourvus de liaison mécanique rigide directe avec les panneaux latéraux du carénage, ce qui veut dire que ces derniers panneaux sont uniquement rapportés fixement indirectement sur le plancher de protection thermique et les deux voiles longitudinaux, en l'occurrence par l'intermédiaire des nervures intérieures transversales et des moyens d'assemblage précités.

Dans cette configuration, le plancher est donc sensiblement libre vis-à-vis des panneaux latéraux, ce qui contribue à faire davantage diminuer les contraintes thermomécaniques subies par celui-ci suite à sa déformation par dilatation thermique.

Ici encore, étant donné que le plancher est susceptible de se déformer par dilatation thermique en rencontrant moins de contraintes qu'auparavant, notamment en raison de son caractère tronçonné, la qualité aérodynamique de ce plancher est de ce fait également fortement augmentée.

De plus, elle est d'autant plus augmentée que l'absence d'encastrement du plancher tronçonné dans les panneaux latéraux évite avantageusement la mise en contrainte et la déformation de ces panneaux latéraux qui pourraient être susceptibles de se produire suite à la déformation par dilatation thermique du plancher. A cet égard, il est précisé que les panneaux latéraux baignent dans le flux secondaire relativement froid, de sorte qu'ils ne subissent que très peu de déformation par dilatation thermique. Ainsi, leur niveau global de déformation est donc maintenu relativement bas, ce qui induit une qualité aérodynamique très satisfaisante, participant à la diminution des effets de traînée parasite et à l'amélioration du rapport performance/consommation de l'aéronef.

Toujours de manière à minimiser les perturbations aérodynamiques et la traînée parasite qui en découle, chacun des deux panneaux latéraux est de préférence réalisé de manière à ne former qu'une seule pièce, sur toute la longueur du carénage. Ainsi, cette solution contraste avec celle visant à prévoir des panneaux latéraux tronçonnés longitudinalement, susceptible de générer la formation de jeux et de désaffleurements importants entre les différents tronçons qui les composent. Néanmoins, il est possible de réaliser chaque panneau latéral d'un seul tenant à l'aide de plusieurs sections longitudinales rapportées rigidement/fixement les unes aux autres, sans sortir du cadre de l'invention.

De même, chacun des deux panneaux latéraux est de préférence réalisé en aluminium ou en matériau composite formé par un mélange de résine et de fibres de carbone et/ou de verre.

De préférence, les moyens d'assemblage comportent une pluralité de dispositifs de fixation comprenant chacun :
- une première ferrure encastrée sur l'une des nervures intérieures transversales,
- une seconde ferrure encastrée sur un tronçon de plancher donné,
- une troisième ferrure encastrée sur un tronçon de plancher adjacent au tronçon de plancher donné, et
- un axe de raccordement traversant les première, seconde et troisième ferrures.

Ainsi, il est préférentiellement prévu qu'un même dispositif de fixation, porté par l'une des nervures intérieures, serve simultanément au raccordement sur cette nervure de deux tronçons de plancher adjacents dans la direction longitudinale. Dans un tel cas, c'est le dispositif de fixation qui participe à la réalisation d'une liaison mécanique non rigide entre les deux tronçons concernés.

A cet égard, préférentiellement, pour chaque dispositif de fixation, au moins l'une des deux liaisons parmi celle entre la seconde ferrure et l'axe de raccordement, et celle entre la troisième ferrure et l'axe de raccordement, autorise un déplacement relatif des deux éléments concernés selon une direction de l'axe de raccordement. Le déplacement relatif indiqué ci-dessus, même si il est prévu pour être d'amplitude limitée, est autorisé de manière à éviter l'apparition de contrainte mécanique importante durant les phases de dilatation thermique des tronçons de plancher. Effectivement, durant ces phases, le/les déplacements relatifs observés proviennent en fait d'un déplacement relatif entre les deux tronçons de plancher adjacents se dilatant. Il est noté que l'assemblage bord à bord des deux tronçons de plancher est réalisé de telle sorte que la jonction affleurante soit conservée même après leur déplacement relatif.

De préférence, pour chaque dispositif de fixation, l'axe de raccordement est orienté sensiblement selon la direction longitudinale.

Toujours préférentiellement, chaque tronçon de plancher est monté seulement sur deux nervures intérieures transversales, uniquement à l'aide de quatre dispositifs de fixation, dont deux d'entre eux sont portés par l'une des deux nervures intérieures transversales, et dont les deux autres sont portés par l'autre nervure intérieure transversale. Naturellement, le nombre et l'emplacement des dispositifs de fixation pourraient être adaptés par l'homme du métier, en fonction des besoins rencontrés.

L'invention a aussi pour objet un dispositif d'accrochage d'un moteur destiné à être interposé entre une voilure d'aéronef et le moteur, ce dispositif comprenant un carénage aérodynamique arrière inférieur tel que décrit ci-dessus.

En outre, l'invention a également pour objet un ensemble moteur comprenant un moteur tel qu'un turboréacteur et un dispositif d'accrochage de ce moteur, ce dispositif étant conforme à celui qui vient d'être évoqué.

Enfin, un autre objet de la présente invention est un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un dispositif d'accrochage selon un mode de réalisation préféré de la présente invention ;
- la figure 2 représente une vue de côté plus détaillée du carénage aérodynamique arrière inférieur équipant le dispositif d'accrochage montré sur la figure 1, ce carénage étant également objet de la présente invention ;
- la figure 3 représente une vue en perspective d'une partie du carénage aérodynamique arrière inférieur montré sur la figure 2 ;
- la figure 4 représente une demi-vue en coupe transversale prise le long de la ligne IV-IV de la figure 2 ; et
- la figure 5 représente une vue en coupe prise le long de la ligne V-V de la figure 4.

### EXPOSÉ DÉTAILLÉ DE MODES DE RÉALISATION PRÉFÉRÉS

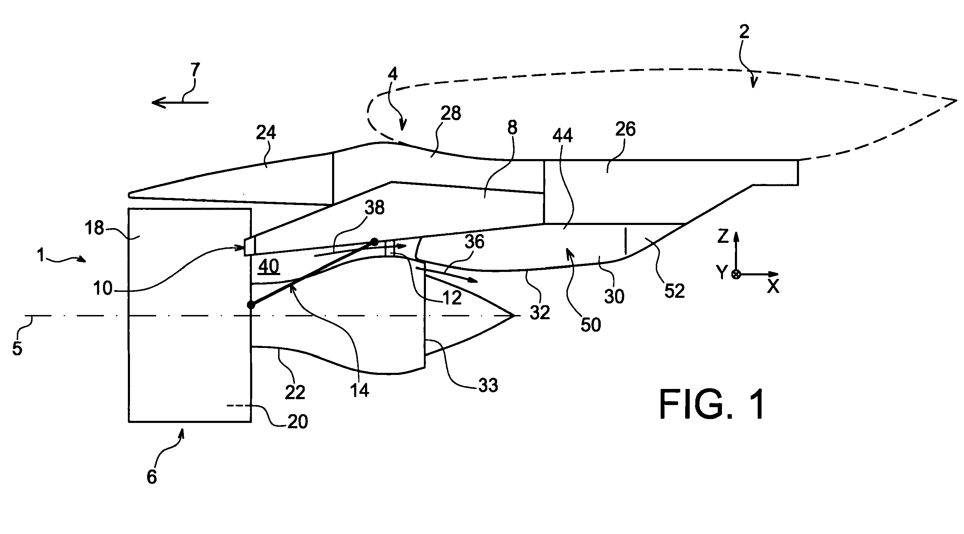

En référence à la figure 1, on voit un ensemble moteur 1 pour aéronef destiné à être fixé sous une aile 2 de cet aéronef, cet ensemble 1 comportant un dispositif d'accrochage 4 selon un mode de réalisation préféré de la présente invention, ainsi qu'un moteur 6 tel qu'un turboréacteur accroché sous ce dispositif 4.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le dispositif d'accrochage 4 comporte une autre série d'attaches (non représentées) rapportées sur la structure rigide 8 et permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6 et à celle du carénage aérodynamique arrière inférieur qui sera présenté ci-après, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6 et à celle du carénage aérodynamique arrière inférieur, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut donc voir les deux attaches moteur 10, 12, le dispositif de reprise des efforts de poussée 14, la structure rigide 8 du dispositif d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrites ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est pourvu de nervures transversales (non représentées) prenant chacune la forme d'un rectangle orienté dans un plan YZ.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18. L'attache moteur avant 10 est conçue de manière classique et connue de l'homme du métier.

D'autre part, l'attache moteur arrière 12, également réalisée de façon classique et connue de l'homme du métier, est quant à elle interposée entre la structure rigide 8 et le carter central 22.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier, à l'exception du carénage aérodynamique arrière inférieur 30 qui sera détaillé ci-dessous.

Plus précisément, la structure aérodynamique avant 24 est placée dans le prolongement avant inférieur de la voilure 2 et au-dessus de la structure primaire 8. Elle est montée fixement sur la structure rigide 8, et présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de carénage aérodynamique, mais permet également la mise en place, la ségrégation et le cheminement de différents systèmes (air, électrique, hydraulique, carburant). De plus, la partie avant de cette structure 24 n'étant pas au contact de la structure rigide 8, il est habituellement interposé un échangeur thermique dans l'espace défini entre ces deux éléments.

Directement dans le prolongement arrière de cette structure 24, toujours sous la voilure et monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière thermique également dite anti-feu servant à protéger le mât et la voilure de la chaleur dégagée par le flux primaire, et la formation d'une continuité aérodynamique entre la sortie du moteur et le mât d'accrochage.

Le carénage 30 précité comporte un plancher de protection thermique 32 pourvu d'une surface extérieure destinée à être épousée par un flux primaire du moteur qu'il délimite partiellement radialement vers l'extérieur, ce flux primaire s'échappant de la tuyère 33 du moteur étant représenté schématiquement par la flèche 36. Par ailleurs, le carénage 30 comporte aussi deux panneaux latéraux 44 qui sont quant à eux prévus pour être épousés extérieurement par un flux secondaire du moteur représenté schématiquement par la flèche 38, en raison de leur implantation dans le canal annulaire 40 de flux secondaire du moteur, et/ou en sortie de celui-ci.

Il est noté que dans le mode de réalisation préféré décrit où le moteur 6 est destiné à être suspendu sous la voilure de l'aéronef, le plancher 32 de protection thermique du mât et de la voilure vis-à-vis du flux primaire 36, constitue une portion inférieure du carénage 30. Naturellement, ce plancher constituerait une portion supérieure du carénage dans le cas alternatif où le moteur serait destiné à être implanté au-dessus de la voilure.

Enfin, comme cela est visible sur la figure 1, il est prévu que l'extrémité avant du plancher 32 vienne épouser l'extrémité arrière supérieure de la tuyère 33, ou bien qu'elle soit fortement rapprochée de cette même extrémité arrière de tuyère 33.

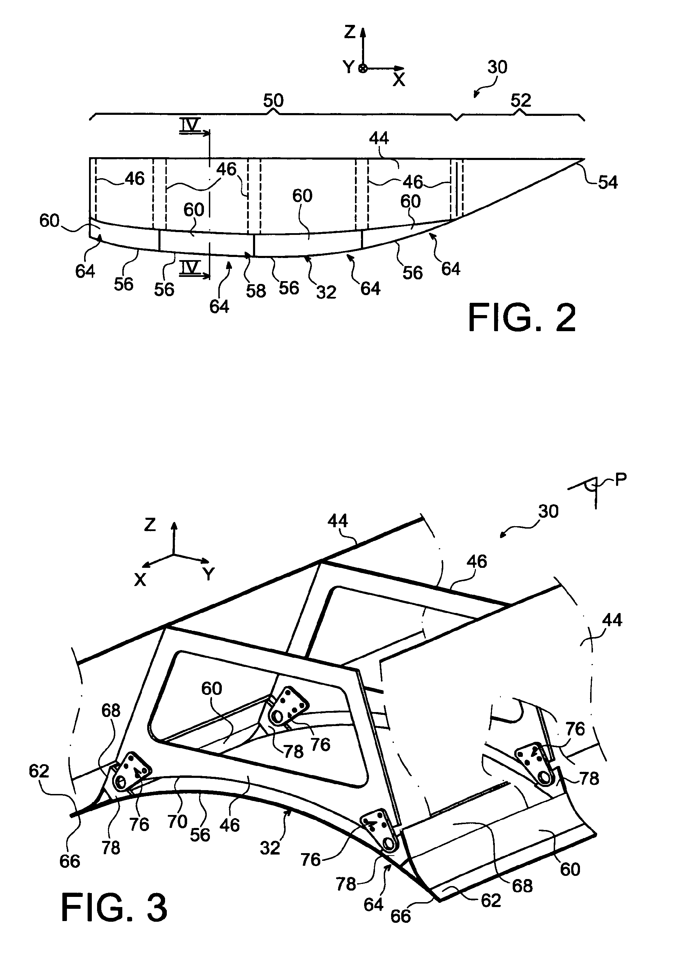

En référence à présent aux figures 2 à 5, on peut apercevoir de façon plus détaillée le carénage aérodynamique arrière inférieur 30, qui prend la forme générale d'un caisson ouvert vers le haut, c'est-à-dire en direction des autres structures du mât 4 sur lesquelles il est destiné à être monté, à savoir la structure aérodynamique arrière 26 et la structure rigide 8. Le carénage 30 présente de préférence un plan de symétrie P correspondant à un plan XZ, ce plan P constituant également un plan vertical de symétrie pour l'ensemble du dispositif d'accrochage 4, et pour le moteur 6.

Le carénage aérodynamique arrière inférieur 30 en forme de caisson comprend les deux panneaux latéraux 44, chacun grossièrement orienté dans un plan XZ, de part et d'autre du plan P. Ils sont assemblés entre eux par des nervures intérieures transversales de rigidification 46 espacées les unes des autres selon la direction X, chacune de ces nervures 46 étant orientée selon un plan YZ et prenant par exemple la forme d'un rectangle ou d'un carré.

Les panneaux latéraux 44 sont chacun réalisé de manière à ne former qu'une seule pièce, de préférence sur toute la longueur du carénage. Néanmoins, cette pièce unique pourrait être réalisée par assemblage de plusieurs éléments rapportés rigidement les uns aux autres, sans sortir du cadre de l'invention. Ils sont montés fixement et directement sur les portions latérales de chacune des nervures intérieures 46, à l'aide de moyens conventionnels connus de l'homme du métier.

D'autre part, le carénage 30 intègre le plancher de protection thermique 32 en partie inférieure du caisson, la partie supérieure restant de préférence ouverte avant d'être rapportée sur le dispositif d'accrochage, comme cela est bien visible sur la figure 3.

Sur la figure 2, on peut apercevoir que le carénage 30 se décompose en deux portion distinctes mais solidaires l'une de l'autre, à savoir une portion avant 50 constituant la majeure partie du carénage, par exemple 60 à 85 % de celui-ci en terme de longueur selon la direction X, et une faible portion arrière 52 prenant globalement la forme d'une pyramide ou d'une pointe dont la base et reliée rigidement à la portion avant 50, et dont le sommet 54 constitue une extrémité arrière du carénage 30. A titre indicatif, la portion avant 50 présente une section transversale grossièrement homogène sur toute sa longueur.

Les panneaux latéraux 44 s'étendent de préférence chacun d'une seule pièce d'un bout à l'autre du carénage 30, c'est-à-dire à la fois le long de la portion avant 50, et le long de la portion arrière 52. En revanche, le plancher de protection thermique 32 s'étend lui de préférence uniquement sur la portion avant 50, et non sur la portion arrière 52, même si cela pourrait bien entendu être envisagé, sans sortir du cadre de l'invention. Cette particularité s'explique notamment par le fait que la portion arrière 52 en forme de pyramide s'éloigne progressivement de l'axe du moteur, de sorte que le flux primaire, qui perd de toute façon en intensité de chaleur en allant vers l'arrière, provoque une incidence thermique moindre sur l'élément inférieur de fermeture de la pyramide 52.

L'une des particularités de la présente invention réside dans le fait que le plancher 32 présente un caractère tronçonné le long de la direction X. En effet, ce plancher de protection thermique 32 est constitué de plusieurs tronçons de plancher 56 placés bord à bord et répartis selon la direction X, et non-rigidement liés les uns aux autres, comme cela sera détaillé ci-après. Ainsi, il doit être compris que la partie supérieure du carénage 30, moins exposée à la chaleur du flux primaire 36, forme un ensemble d'un seul tenant à l'aide des panneaux latéraux 44 et des nervures transversales 46, alors que la partie inférieure du carénage 30 est tronçonnée de manière à limiter la dilatation thermique et les contraintes mécaniques qui en découlent.

Chaque partie inférieure du carénage 30 comprend non seulement un tronçon de plancher 56, mais également deux tronçons 60 de voile longitudinal de jonction aérodynamique, respectivement situés de part et d'autre du plan P. Chaque partie inférieure précitée forme donc un module inférieur 64 fermé verticalement vers le bas par le tronçon de plancher 56, et fermé latéralement respectivement par les deux tronçons de voile 60 solidarisés au tronçon 56.

Plus précisément, on peut voir que chaque tronçon de voile longitudinal 60 présente une première extrémité latérale 62, ou extrémité latérale inférieure, qui est montée fixement et directement sur l'une des extrémités latérales 66 du plancher 32, par exemple par rivetage ou moyen similaire.

Ainsi, on fait de préférence en sorte que chacune des deux jonctions mécaniques rigides et directes entre les deux extrémités 66 et 62 s'effectue tout le long du module inférieur 64 concerné, en suivant grossièrement la direction X.

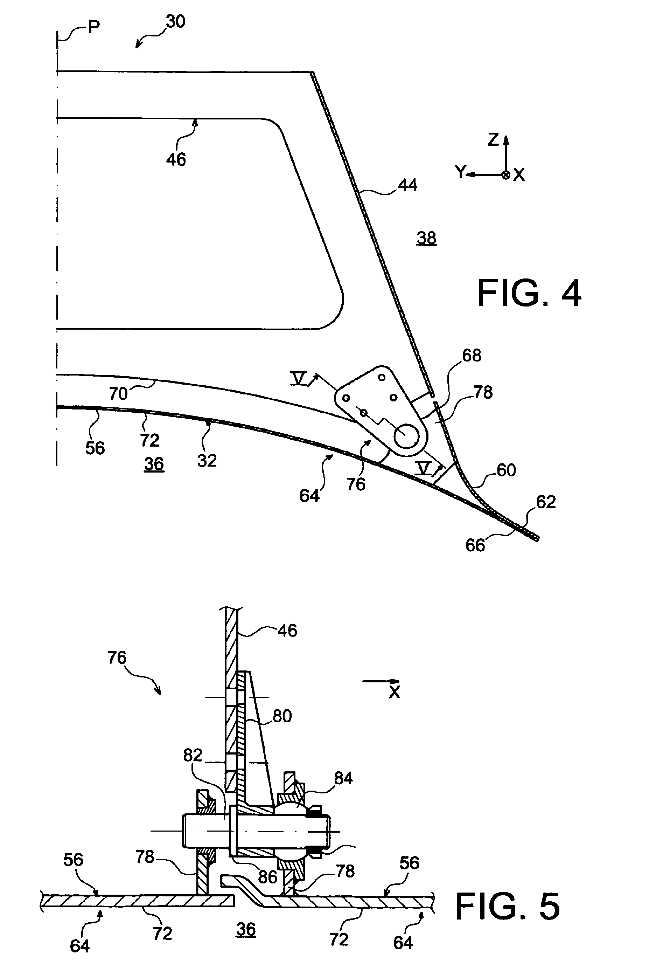

Les deux tronçons de voile longitudinal 60 qui s'étendent au-dessus du tronçon de plancher 56 sont également de préférence chacun réalisés de manière à ne former qu'une seule pièce, et s'étendent depuis leur extrémité inférieure 62 vers une seconde extrémité latérale 68 ou extrémité latérale supérieure, dont la fonction est de s'approcher au plus près des nervures intérieures du carénage 46, et surtout de l'extrémité inférieure des panneaux latéraux 44 afin de former un continuité aérodynamique avec ceux-ci, comme cela est le mieux visible sur la figure 4 montrant une demi-vue en coupe prise entre deux nervures consécutives.

On peut apercevoir sur cette figure 4 que le tronçon de plancher de protection thermique 56 est rapporté indirectement sur la portion inférieure 70 des nervures intérieures 46, par l'intermédiaire de moyens d'assemblage qui seront décrits ultérieurement, et dont l'une des fonctions est de déporter le tronçon 56 vers le bas par rapport aux nervures intérieures transversales 46, afin d'éviter le contact direct avec celles-ci. Par conséquent, le plancher 32 n'est plus monté directement sur les nervures intérieures comme cela était le cas antérieurement, ce qui lui permet avantageusement de se déformer plus librement par dilatation thermique suite à l'importante chaleur dégagée par le flux primaire 36 épousant ce plancher 32.

A cet égard, il est rappelé que le plancher de protection thermique 32 est pourvu d'une surface extérieure référencée 72 sur la figure 4, cette surface étant destinée à être épousée par le flux primaire 36 qu'elle délimite en partie radialement vers l'extérieur, alors que les panneaux latéraux 44 et les tronçons 60 sont quant à eux prévus pour être épousés extérieurement par le flux secondaire 38.

Pour conserver une séparation efficace entre le flux primaire 36 circulant sous le plancher 32 et le flux secondaire 38 épousant les panneaux latéraux 44, c'est-à-dire pour éviter que le flux primaire de température très élevée ne remonte et se propage le long de ces panneaux latéraux 44, on fait de préférence en sorte qu'en section quelconque transversale du carénage, la première extrémité 62 de chaque tronçon de voile longitudinal 60 et son extrémité latérale associée de tronçon de plancher 66 forment conjointement une pointe en forme de Y. Plus précisément, comme cela a été représenté, le Y est disposé de manière à ce que sa pointe, c'est-à-dire sa portion constituée par la zone de contact entre les deux extrémités 66, 62, soit orientée sensiblement vers le bas et latéralement vers l'extérieur par rapport au carénage 30, afin de correctement circonscrire le flux primaire 36 dans la partie inférieure du carénage, à savoir le long et au contact du plancher de protection thermique 32.

A ce titre, toujours en section quelconque transversale du carénage, on prévoit que chaque tronçon de voile longitudinal 60 prend sensiblement la forme d'une ligne formant courbure s'ouvrant vers l'extérieur par rapport au carénage 30, tout en se situant dans le prolongement aérodynamique inférieur du panneau latéral associé 44 avec lequel il forme une surface commune épousée par le flux secondaire 38. De la même manière, le tronçon de plancher 56 situé en dessous de ces tronçons de voile 60 prend lui aussi sensiblement la forme d'une ligne formant courbure s'ouvrant vers l'extérieur par rapport au carénage 30, toujours dans le but de circonscrire le flux primaire 36 dans la partie inférieure de ce carénage.

Avec cette géométrie particulière, il est donc aisément possible de faire en sorte que le plancher 32 soit entièrement déporté et dépourvu de contact vis-à-vis des nervures 46, un espace libre étant donc prévu entre la portion inférieure 70 de celles-ci et le plancher 32.

A titre indicatif, comme montré sur la figure 2, la succession des tronçons de voile 60 selon la direction X, prévus sur les modules inférieurs 64, conduits à la formation de deux voiles longitudinaux de jonction aérodynamique 58 (un seul étant visible en raison de la vue de côté), chacun dépourvu de liaison mécanique rigide directe avec son panneau latéral associé 44, et de préférence situés plus bas qu'une extrémité inférieure de ce panneau avec lequel ils forment une jonction aérodynamique.

En référence plus spécifiquement à la figure 3, on peut voir que chaque module inférieur 64 est rapporté fixement sur la partie supérieure du carénage 30, et plus particulièrement sur la portion inférieure 70 des nervures intérieures 46, à distance de celles-ci, à l'aide de moyens d'assemblage présentant quatre dispositifs de fixation 76.

Chaque dispositif de fixation 76 se trouve agencé au niveau d'une extrémité latérale et inférieure d'une nervure 46, et au niveau d'une extrémité longitudinale et latérale du module inférieur 64. Par conséquent, les quatre dispositifs 76 se trouvent respectivement agencés au niveau des quatre coins du module en forme grossière de carré/rectangle, et placés par couple sur deux nervures transversales 46, de préférence directement consécutives.

En référence à présent à la figure 5, il est détaillé l'un des dispositifs de fixation 76, dont la particularité est qu'il assure simultanément l'accrochage de deux modules inférieures 64 consécutifs, portant respectivement deux tronçons de plancher 56 agencés bord à bord. Ainsi, comme cela sera explicité ci-après, chaque dispositif 76 participe à la réalisation d'une liaison mécanique non-rigide entre les deux tronçons 56 adjacents.

Le dispositif 76 comporte une première ferrure 80, encastrée sur la nervure intérieure transversale 46, de préférence au niveau d'une extrémité latérale et inférieure de celle-ci. D'autre part, il présente une seconde ferrure 78 encastrée sur un tronçon de plancher donné 56, dénommé ci-après tronçon avant en référence à la figure 5, ainsi qu'une troisième ferrure 78 encastrée sur un tronçon de plancher 56 adjacent au tronçon de plancher avant, et dénommé ci-après tronçon arrière. Comme cela est le mieux visible sur les figures 3 et 4, les ferrures 78 sont agencées dans des plans sensiblement verticaux, et relient chacune le tronçon de plancher 56 à l'un des deux tronçons de voile 60. De plus, pour assurer le montage des quatre dispositifs de fixation 76, chaque module inférieur 64 est donc équipé de quatre ferrures 78 sensiblement identiques, réparties au quatre coins de ce module.

Pour permettre l'assemblage de ces ferrures 80, 78, 78 sensiblement parallèles, il est prévu un axe de raccordement 82 traversant ces trois ferrures, l'axe 82 étant de préférence orienté selon la direction X.

De plus, la ferrure 78 du tronçon de plancher avant 56 est montée librement coulissante sur l'axe 82, ce qui autorise un déplacement relatif des deux éléments concernés selon la direction X. En revanche, on prévoit que la ferrure 78 du tronçon de plancher arrière 56 est montée par l'intermédiaire d'une liaison rotule sur l'axe 82, en butée sur un épaulement d'axe 86 interdisant les mouvements relatifs de coulissement selon la direction X.

Ainsi, pendant les phases de dilatation thermique des tronçons de plancher 56, durant lesquelles on observe un déplacement relatif selon la direction X entre les bords adjacents de deux tronçons de plancher se dilatant, ce déplacement relatif est transmis aux dispositifs de fixation 76 qui subissent à leur tour un déplacement relatif privilégié entre la ferrure 78 du tronçon avant et l'axe 82. Cette conception particulière est par conséquent prévue de manière à éviter l'apparition de contrainte mécanique importante durant les phases de dilatation thermique des tronçons de plancher 56.

Pendant ces mêmes phases de dilatation thermique des tronçons de plancher 56, ceux-ci peuvent aussi voir leur forme/courbure modifiée en raison de leur déformation thermique selon la direction Y, combinée au maintien assuré dans cette même direction par les axes 82, de part et d'autre de chaque tronçon.

Enfin, en raison de la conception particulière du carénage 30 qui vient d'être détaillée, l'ensemble des éléments constitutifs de ce dernier peuvent être réalisés en aluminium ou en matériau composite formé par un mélange de résine et de fibres de carbone et/ou de verre, ce qui engendre avantageusement une réduction de sa masse et de son coût de fabrication. De plus, les éléments de la partie supérieure du carénage 30 peuvent être réalisés dans un matériau moins sensible à la chaleur que ceux appartenant aux modules inférieurs 64, plus proches de la source de chaleur.

Bien entendu, diverses modifications peuvent être apportées par l'homme du métier à l'invention qui vient d'être décrite, uniquement à titre d'exemples non limitatifs. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure.

## Revendications

1. Carénage aérodynamique arrière inférieur (30) pour dispositif d'accrochage (4) d'un moteur (6) destiné à être interposé entre une voilure (2) d'aéronef et ledit moteur (6), ledit carénage formant caisson comprenant deux panneaux latéraux (44) assemblés entre eux par des nervures intérieures transversales de rigidification (46) espacées les unes des autres selon une direction longitudinale (X) dudit carénage, et comportant en outre un plancher de protection thermique (32) pourvu d'une surface extérieure (72) destinée à être épousée par un flux primaire (36) dudit moteur,
**caractérisé en ce que** ledit plancher de protection thermique (32) est constitué de plusieurs tronçons de plancher (56) répartis selon la direction longitudinale (X) et non-rigidement liés les uns aux autres, et **en ce que** ledit carénage aérodynamique arrière inférieur comporte en outre des moyens d'assemblage (76) des tronçons de plancher (56), déportant ces derniers desdites nervures intérieures transversales de rigidification (46) auxquelles sont raccordés lesdits moyens d'assemblage (76).

2. Carénage aérodynamique (30) selon la revendication 1, **caractérisé en ce que** deux tronçons de plancher (56) quelconques et directement consécutifs dans la direction longitudinale (X) sont agencés bord à bord.

3. Carénage aérodynamique (30) selon la revendication 1 ou la revendication 2, **caractérisé en ce qu'**à chaque tronçon de plancher (56) sont associés deux tronçons de voile longitudinal de jonction aérodynamique (60), lesdits deux tronçons (60) disposant chacun d'une première extrémité latérale (62) montée fixement respectivement sur l'une et l'autre des deux extrémités latérales (66, 66) dudit tronçon de plancher associé, et d'une seconde extrémité latérale (68) agencée à proximité respectivement de l'un et l'autre des deux panneaux latéraux (44).

4. Carénage aérodynamique (30) selon la revendication 3, **caractérisé en ce qu'**en section quelconque transversale dudit carénage, ladite première extrémité (62) de chaque tronçon de voile longitudinal (60) et son extrémité latérale associée (66) de tronçon de plancher (56) forment conjointement une pointe.

5. Carénage aérodynamique (30) selon la revendication 3, **caractérisé en ce qu'**en section quelconque transversale dudit carénage, ladite première extrémité (62) de chaque tronçon de voile longitudinal (60) et son extrémité latérale associée (66) de tronçon de plancher (56) forment conjointement une pointe en forme de Y.

6. Carénage aérodynamique (30) selon l'une quelconque des revendications précédentes, **caractérisé en ce qu'**en section quelconque transversale dudit carénage, chaque tronçon de voile longitudinal (60) et ledit tronçon de plancher de protection thermique (56) prennent chacun sensiblement la forme d'une ligne formant courbure s'ouvrant vers l'extérieur par rapport audit carénage.

7. Carénage aérodynamique (30) selon l'une quelconque des revendications 3 à 6, **caractérisé en ce que** lesdits tronçons de voile longitudinal (60) et lesdits tronçons de plancher de protection thermique (56) sont réalisés en aluminium ou en matériau composite formé par un mélange de résine et de fibres de carbone et/ou de verre.

8. Carénage aérodynamique (30) selon l'une quelconque des revendications 3 à 7, **caractérisé en ce que** lesdits tronçons de plancher de protection thermique (56) et lesdits tronçons de voile longitudinal (60) sont dépourvus de liaison mécanique rigide directe avec lesdits panneaux latéraux (44) du carénage.

9. Carénage aérodynamique (30) selon l'une quelconque des revendications précédentes, **caractérisé en ce que** chacun des deux panneaux latéraux (44) est réalisé de manière à ne former qu'une seule pièce, sur toute la longueur dudit carénage.

10. Carénage aérodynamique (30) selon l'une quelconque des revendications précédentes, **caractérisé en ce que** chacun des deux panneaux latéraux (44) est réalisé en aluminium ou en matériau composite formé par un mélange de résine et de fibres de carbone et/ou de verre.

11. Carénage aérodynamique (30) selon l'une quelconque des revendications précédentes, **caractérisé en ce que** lesdits tronçons de plancher de protection thermique (56) sont déportés desdites nervures intérieures transversales (46) de manière à être entièrement dépourvus de contact avec celles-ci.

12. Carénage aérodynamique selon l'une quelconque des revendications précédentes, **caractérisé en ce que** lesdits moyens d'assemblage comportent une pluralité de dispositifs de fixation (76) comprenant chacun :
- une première ferrure (80) encastrée sur l'une desdites nervures intérieures transversales (46),
- une seconde ferrure (78) encastrée sur un tronçon de plancher donné (56),
- une troisième ferrure (78) encastrée sur un tronçon de plancher adjacent (56) audit tronçon de plancher donné, et
- un axe de raccordement (82) traversant lesdites première, seconde et troisième ferrures (80, 78, 78).

13. Carénage aérodynamique (30) selon la revendication 12, **caractérisé en ce que** pour chaque dispositif de fixation (76), au moins l'une des deux liaisons parmi celle entre la seconde ferrure (78) et l'axe de raccordement (82), et celle entre la troisième ferrure (78) et l'axe de raccordement (82), autorise un déplacement relatif des deux éléments concernés selon une direction de l'axe de raccordement (82).

14. Carénage aérodynamique (30) selon la revendication 12 ou la revendication 13, **caractérisé en ce que** pour chaque dispositif de fixation (76), l'axe de raccordement (84) est orienté sensiblement selon la direction longitudinale (X).

15. Carénage aérodynamique (30) selon l'une quelconque des revendications 12 à 14, **caractérisé en ce que** chaque tronçon de plancher (56) est monté seulement sur deux nervures intérieures transversales (46), uniquement à l'aide de quatre dispositifs de fixation (76), dont deux d'entre eux sont portés par l'une des deux nervures intérieures transversales (46), et dont les deux autres sont portés par l'autre nervure intérieure transversale (46).

16. Dispositif d'accrochage (4) d'un moteur (6) destiné à être interposé entre une voilure (2) d'aéronef et ledit moteur (6), **caractérisé en ce qu'**il comprend un carénage aérodynamique arrière inférieur (30) selon l'une quelconque des revendications précédentes.

17. Ensemble moteur (1) comprenant un moteur (6) et un dispositif d'accrochage (4) du moteur (6) selon la revendication 16.

18. Aéronef comprenant au moins un ensemble moteur (1) selon la revendication 17.

## Claims

1. A rear lower aerodynamic fairing (30) for an attachment device (4) for an engine (6) intended to be interposed between a wing (2) of an aircraft and said engine (6), said fairing forming a structural box comprising two side panels (44) assembled together with inner transverse stiffening ribs (46) spaced apart from each other along a longitudinal direction (X) of said fairing, and further including a heat protection floor (32) provided with an outer surface (72) intended to be closely followed by a primary flow (36) of said engine,
**characterized in that** said heat protection floor (32) consists of several floor segments (56) distributed along the longitudinal direction (X) and non-rigidly bound to each other, and **in that** said rear lower aerodynamic fairing further includes means (76) for assembling floor segments (56), offsetting the latter of said inner transverse stiffening ribs (46) to which are connected said assembling means (76).

2. The aerodynamic fairing (30) according to claim 1, **characterized in that** any two and directly consecutive floor segments (56) in the longitudinal direction (X) are laid out edge to edge.

3. The aerodynamic fairing (30) according to claim 1 or claim 2, **characterized in that** two aerodynamic junction longitudinal web segments (60) are associated with each floor segment (56), said two segments (60) each having a first side end (62) fixedly mounted on both of the two side ends (66, 66) of said associated floor segment, respectively, and a second side end (68) laid out in proximity to both of the two side panels (44), respectively.

4. The aerodynamic fairing (30) according to claim 3, **characterized in that** in any transverse segment of said fairing, said first end (62) of each longitudinal web segment (60) and its associated side end of floor segment (56) form together a tip.

5. The aerodynamic fairing (30) according to claim 3, **characterized in that** in any transverse section of said fairing, said first end (62) of each longitudinal web segment (60) and its associated side end (66) of floor segment (56) form together a tip in the shape of a Y.

6. The aerodynamic fairing (30) according to any of the preceding claims, **characterized in that** in any transverse section of said fairing, each longitudinal web segment (60) and said heat protection floor segment (56) each substantially assume the shape of line forming a curve opening outwards relatively to said fairing.

7. The aerodynamic fairing (30) according to any of the claims 3 to 6, **characterized in that** said longitudinal web segments (60) and said heat protection floor segment (56) are made in aluminium or in a composite material formed by a mixture of resin and of carbon and/or glass fibers.

8. The aerodynamic fairing (30) according to any of the any of claims 3 to 7, **characterized in that** said heat protection floor segments (56) and said longitudinal web segments (60) are without any direct rigid mechanical link with said side panels (44) of the fairing.

9. The aerodynamic fairing (30) according to any of the preceding claims, **characterized in that** each of the two side panels (44) is made in order to form only a single part, over the whole length of said fairing.

10. The aerodynamic fairing (30) according to any of the preceding claims, **characterized in that** each of the two side panels (44) is made in aluminium or in a composite material formed by a mixture of resin and of carbon and/or glass fibers.

11. The aerodynamic fairing (30) according to any of the preceding claims, **characterized in that** said heat protection floor segments (56) are offset from said inner transverse ribs (46) so as to be entirely without any contact with the latter.

12. The aerodynamic fairing (30) according to any of the preceding claims, **characterized in that** said assembling means include a plurality of attachment devices (76) each comprising:
- a first recessed fixture (80) on one of said inner transverse ribs (46),
- a second recessed fixture (78) on a given floor segment (56),
- a third recessed fixture (78) on a floor segment (56) adjacent to said given floor segment, and
- a connecting axis (82) crossing said first, second and third fixtures (80, 78, 78).

13. The aerodynamic fairing (30) according to claim 12, **characterized in that** for each attachment device (76) at least one of the two links among the one between the second fixture (76), at least one of the two links among the one between the second fixture (78) and the connecting axis (82), and the one between the third fixture (78) and the connecting axis (82), allows a relative displacement of both relevant elements along a direction of the connecting axis (82).

14. The aerodynamic fairing (30) according to claim 12 or claim 13, **characterized in that** for each attachment device (76), the connecting axis (84) is substantially oriented along the longitudinal direction (X).

15. The aerodynamic fairing (30) according to any of claims 12 to 14, **characterized in that** each floor segment (56) is only mounted on two inner transverse ribs (46), only with four attachment devices (76), for which two of them are borne by one of the two inner transverse ribs (46), and for which the two other ones are borne by the other inner transverse ribs (46).

16. An attachment device (4) for an engine (6) intended to be interposed between a wing (2) of an aircraft and said engine (6), **characterized in that** it comprises a rear lower aerodynamic fairing (30) according to any of the preceding claims.

17. An engine assembly (1) comprising an engine (6) and an attachment device (4) for the engine (6) according to claim 16.

18. An aircraft comprising at least one engine assembly (1) according to claim 17.

## Patentansprüche

1. Hintere untere aerodynamische Verkleidung (30) für eine Befestigungsvorrichtung (4) eines Triebwerks (6) zur Anbringung zwischen einer Tragfläche (2) eines Luftfahrzeugs und dem Triebwerk (6), wobei die Verkleidung einen Kasten bildet, der zwei Seitenplatten (44) umfasst, die über innenliegende Versteifungsquerrippen (46), die voneinander längs einer Längsrichtung (X) der Verkleidung beabstandet sind, miteinander verbunden sind, und ferner einen Wärmeschutzboden (32) aufweist, der mit einer äußeren Oberfläche (72) ausgestattet ist, der ein Primärstrom (36) des Triebwerks folgen soll,
**dadurch gekennzeichnet, dass** der Wärmeschutzboden (32) aus mehreren Bodenteilstücken (56) besteht, die in der Längsrichtung (X) aufgeteilt sind und nichtstarr miteinander verbunden sind, und dass die hintere untere aerodynamische Verkleidung ferner Verbindungsmittel (76) für die Bodenteilstücke (56) aufweist, die diese letzteren von den innenliegenden Versteifungsquerrippen (46), an denen die Verbindungsmittel (76) befestigt sind, wegverlagern.

2. Aerodynamische Verkleidung (30) nach Anspruch 1, **dadurch gekennzeichnet, dass** zwei beliebige und in der Längsrichtung (X) direkt aufeinanderfolgende Bodenteilstücke (56) Kante an Kante angeordnet sind.

3. Aerodynamische Verkleidung (30) nach Anspruch 1 oder Anspruch 2, **dadurch gekennzeichnet, dass** mit jedem Bodenteilstück (56) zwei Teilstücke eines Längssegels bzw. einer gebogenen Längswand zur aerodynamischen Verbindung (60) verbunden sind, wobei die zwei Teilstücke (60) jeweils ein erstes seitliches Ende (62), das fest an dem einen bzw. dem anderen der beiden seitlichen Enden (66, 66) des entsprechenden Bodenteilstücks angebracht ist, und ein zweites seitliches Ende (68), das nahe der einen bzw. der anderen der zwei Seitenplatte (44) angeordnet ist, aufweisen.

4. Aerodynamische Verkleidung (30) nach Anspruch 3, **dadurch gekennzeichnet, dass** in einem beliebigen Querschnitt der Verkleidung das erste Ende (62) jedes Teilstücks eines Längssegels (60) und das hierzu entsprechende seitliche Ende (66) des Bodenteilstücks (56) gemeinsam eine Spitze bzw. einen Keil bilden.

5. Aerodynamische Verkleidung (30) nach Anspruch 3, **dadurch gekennzeichnet, dass** in einem beliebigen Querschnitt der Verkleidung das erste Ende (62) jedes Teilstücks eines Längssegels (60) und das hierzu entsprechende seitliche Ende (66) des Bodenteilstücks (56) gemeinsam eine Spitze in der Form eines Y bilden.

6. Aerodynamische Verkleidung (30) nach einem der vorhergehenden Ansprüche, **dadurch gekennzeichnet, dass** in einem beliebigen Querschnitt der Verkleidung jedes Teilstück eines Längssegels (60) und das Wärmeschutzbodenteilstück (56) jeweils im wesentlichen die Form einer eine Krümmung aufweisenden Kurve einnimmt, die sich in Bezug auf die Verkleidung nach außen öffnet.

7. Aerodynamische Verkleidung (30) nach einem der Ansprüche 3 bis 6, **dadurch gekennzeichnet, dass** die Teilstücke eines Längssegels (60) und die Wärmeschutzbodenteilstücke (56) in Aluminium oder einem Verbundmaterial, das durch ein Gemisch aus Harz und Carbonfasern und/oder Glasfasern gebildet wurde, ausgeführt sind.

8. Aerodynamische Verkleidung (30) nach einem der Ansprüche 3 bis 7, **dadurch gekennzeichnet, dass** die Wärmeschutzbodenteilstücke (56) und die Teilstücke eines Längssegels (60) keine direkte starre mechanische Verbindung mit den Seitenplatten (44) der Verkleidung aufweisen.

9. Aerodynamische Verkleidung (30) nach einem der vorhergehenden Ansprüche, **dadurch gekennzeichnet, dass** jede der zwei Seitenplatten (44) derart ausgeführt ist, dass sie über die gesamte Lange der Verkleidung nur ein einziges Teil bildet.

10. Aerodynamische Verkleidung (30) nach einem der vorhergehenden Ansprüche, **dadurch gekennzeichnet, dass** jede der zwei Seitenplatten (44) in Aluminium oder einem Verbundmaterial, das durch ein Gemisch aus Harz und Carbonfasern und/oder Glasfasern gebildet wurde, ausgeführt ist.

11. Aerodynamische Verkleidung (30) nach einem der vorhergehenden Ansprüche, **dadurch gekennzeichnet, dass** die Wärmeschutzbodenteilstücke (56) von den innenliegenden Querrippen (46) derart wegverlagert sind, dass überhaupt kein Kontakt mit diesen besteht.

12. Aerodynamische Verkleidung nach einem der vorhergehenden Ansprüche, **dadurch gekennzeichnet, dass** die Verbindungsmittel mehrere Befestigungsmittel (76) aufweisen, die jeweils umfassen:
- einen ersten Beschlag (80), der an einer der innenliegenden Querrippen (46) angebracht ist,
- einen zweiten Beschlag (78), der an einem gegebenen Bodenteilstück (56) angebracht ist,
- einen dritten Beschlag (78), der an einem zum gegebenen Bodenteilstück benachbarten Bodenteilstück (56) angebracht ist, und
- eine Verbindungsachse (82), die durch den ersten, den zweiten und den dritten Beschlag (80, 78, 78) hindurchgeht.

13. Aerodynamische Verkleidung (30) nach Anspruch 12, **dadurch gekennzeichnet, dass** für jede Befestigungsvorrichtung (76) die Verbindung zwischen dem zweiten Beschlag (78) und der Verbindungsachse (82) und/oder die Verbindung zwischen dem dritten Beschlag (78) und der Verbindungsachse (82) eine relative Verschiebung der zwei betreffenden Elemente in Richtung der Verbindungsachse (82) ermöglichen.

14. Aerodynamische Verkleidung (30) nach Anspruch 12 oder Anspruch 13, **dadurch gekennzeichnet, dass** für jede Befestigungsvorrichtung (76) die Verbindungsachse (84) im wesentlichen in der Längsrichtung (X) ausgerichtet ist.

15. Aerodynamische Verkleidung (30) nach einem der Ansprüche 12 bis 14, **dadurch gekennzeichnet, dass** jedes Bodenteilstück (56) nur an zwei innenliegenden Querrippen (46) lediglich mit Hilfe von vier Befestigungsvorrichtungen (76), von denen zwei von einer der zwei innenliegenden Querrippen (46) getragen werden und die anderen zwei von der anderen innenliegenden Querrippe (46) getragen werden, angebracht ist.

16. Befestigungsvorrichtung (4) für ein Triebwerk (6) zur Anbringung zwischen einer Tragfläche (2) eines Luftfahrzeugs und dem Triebwerk (6), **dadurch gekennzeichnet, dass** sie eine hintere untere aerodynamische Verkleidung (30) mach einem der vorhergehenden Ansprüche umfasst.

17. Triebwerkanordnung (1), umfassend ein Triebwerk (6) und eine Befestigungsvorrichtung (4) des Triebwerks (6) nach Anspruch 16.

18. Luftfahrzeug, umfassend mindestens eine Triebwerkanordnung (1) nach Anspruch 17.
